# EUROPEAN PATENT SPECIFICATION

(11) **EP 4 715 426 B1**
(45) Date of publication and mention of the grant of the patent: **02.12.2026**
(21) Application number: 24217488.6
(22) Date of filing: 04.12.2024
(51) Int. Cl.: G01S 13/42, G01S 13/931

(54) **METHOD FOR REDUCING COMPUTATIONAL COMPLEXITY IN DETERMINING DIRECTION OF ARRIVAL FOR A RADAR SYSTEM, AND RADAR SYSTEM IMPLEMENTING THE SAME**
VERFAHREN ZUR VERRINGERUNG DER RECHENKOMPLEXITÄT BEI DER BESTIMMUNG DER EINFALLSRICHTUNG FÜR EIN RADARSYSTEM, UND ZUGEHÖRIGES RADARSYSTEM
PROCÉDÉ DE RÉDUCTION DE COMPLEXITÉ DE CALCUL POUR DÉTERMINER UNE DIRECTION D'ARRIVÉE POUR UN SYSTÈME RADAR, ET SYSTÈME RADAR METTANT EN OEUVRE CELUI-CI

(30) Priority: 23.09.2024 TW 113135956
(43) Date of publication of application: 25.03.2026
(73) Proprietor: Alpha Networks Inc., 300094 Hsinchu (TW)
(72) Inventor: TSAY, Wen-Jiunn, 300094 Hsinchu (TW); YANG, Tzong-Shiann, 300094 Hsinchu (TW); SU, Hsuan-Jung, Hsinchu 300094 (TW); HOU, Chung-Yi, Hsinchu 300094 (TW)
(74) Representative: Zimmermann, Tankred Klaus

(56) References cited:
- GANGULY SAURAV ET AL: "Compressive Sensing Based Off-Grid DOA Estimation Using OMP Algorithm", 2019 6TH INTERNATIONAL CONFERENCE ON SIGNAL PROCESSING AND INTEGRATED NETWORKS (SPIN), IEEE, 7 March 2019 (2019-03-07), pages 772 - 775, XP033547817, DOI: 10.1109/SPIN.2019.8711677
- JIANG HONG ET AL: "Off-grid DOA estimation for nested array using atomic norm minimisation", ELECTRONICS LETTERS, THE INSTITUTION OF ENGINEERING AND TECHNOLOGY, GB, vol. 54, no. 23, 15 November 2018 (2018-11-15), pages 1344 - 1346, XP006070488, ISSN: 0013-5194, DOI: 10.1049/EL.2018.6532
- SHI SHULI ET AL: "Block sparse representation approach to 2D DOA and polarisation estimation of wideband signals using a sparse vector antenna array", IET RADAR SONAR NAVIGATION, THE INSTITUTION OF ENGINEERING AND TECHNOLOGY, UK, vol. 14, no. 12, 1 December 2020 (2020-12-01), pages 1929 - 1939, XP006093762, ISSN: 1751-8784, DOI: 10.1049/IET-RSN.2020.0207

## Description

The disclosure relates to a method for determining direction of arrival for a radar system and a radar system implementing the same, and more particularly to a method for reducing computational complexity in determining direction of arrival for a radar system and a radar system implementing the same.

Radar systems are widely used in fields such as self-driving and driving assistance. A radar system installed on a vehicle is configured to receive radar signals through its antenna array, and to calculate the radar signals through its processing unit, so as to obtain real-time information related to distances and directions of arrival (DoAs) of surrounding objects.

Conventional methods for calculating DoAs include Capon algorithm, multiple signal classification (MUSIC) and estimation of signal parameters via rotational invariance techniques (ESPRIT), all of which can be applied to calculations for uniform linear arrays.

XP033547817 presents a method of Direction of Arrival, DOA, estimation using a sparse array based on compressive sensing. Sources are assumed to be at off-grid location with respect to the receiver array. The off-grid DOA of the sources can be estimated almost accurately by using the Orthogonal Matching Pursuit, OMP, algorithm for reconstruction from the sparse samples.

In realistic cases where a number of target objects is greater than a number of virtual antennas of the radar system, the estimation of DoAs can be considered an underdetermined linear system problem, which can be solved using a non-uniform linear array. Spatial smoothing techniques are commonly used for calculations involving the non-uniform linear array. Although spatial smoothing techniques can improve calculation stability by dividing the array and taking an average, they also reduce the effective degrees of freedom (DoFs) (i.e., a number of signal sources that can be independently resolved), which degrades the performance for the estimation of DoAs.

Therefore, an object of the invention is to provide a method for reducing computational complexity in determining direction of arrival (DoA) for a radar system and a radar system implementing the same that can alleviate at least one of the drawbacks of the prior art.

According to the invention, there is provided a method for reducing computational complexity in determining DoA for a radar system according to claim 1.

According to the invention, there is provided a radar system according to claim 8.

Other features and advantages of the disclosure will become apparent in the following detailed description of the embodiment(s) with reference to the accompanying drawings. It is noted that various features may not be drawn to scale.
Figure 1 is a block diagram illustrating a radar system according to an embodiment of the disclosure.
Figure 2 is a schematic view illustrating a polar angle (θ) and an azimuthal angle (φ) of a target object detected by the radar system in a spherical coordinate system.
Figure 3 is a flow chart illustrating a method for reducing computational complexity in determining direction of arrival for a radar system according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

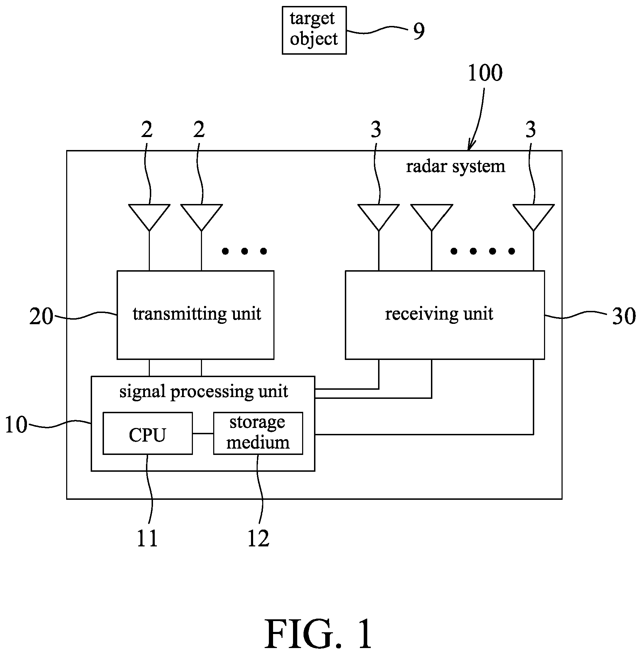

Referring to Figure 1, an embodiment of a method for reducing computational complexity in determining direction of arrival (DoA) for a radar system 100 according to this disclosure is implemented by the radar system 100. In one embodiment, the radar system 100 is, but not limited to, a time-division multiplexing multiple-input multiple-output (TDM-MIMO) radar. The radar system 100 may be installed on a vehicle for detecting distances, DoAs, speeds, etc. of a plurality of target objects 9 in the surroundings of the vehicle (only one target object 9 is shown as illustration). The radar system 100 includes a number M of transmitting antennas 2, a transmitting unit 20, a number N of receiving antennas 3, a receiving unit 30, and a signal processor 10 that is electrically connected to the transmitting unit 20 and the receiving unit 30. The transmitting antennas 2 and the receiving antennas 3 cooperatively form MxN virtual antennas, where both M and N are greater than or equal to 2.

The transmitting antennas 2 are electrically connected to the signal processor 10 through the transmitting unit 20. The transmitting unit 20 is configured to generate a transmission signal Tₓ based on a control signal provided by the signal processor 10, and to emit the transmission signal Tₓ through one of the transmitting antennas 2. The receiving antennas 3 are electrically connected to the signal processor 10 through the receiving unit 30. The receiving unit 30 is configured to receive a reflection signal Rₓ through one of the receiving antennas 3, where the reflection signal Rₓ is generated by the target object 9 reflecting the transmision signal Tₓ. The transmitting unit 20 includes a waveform generator, an oscillator, a power amplifier, etc., and the receiving unit 30 includes a power amplifier, a mixer, a low-pass filter, an analog-to-digital converter, etc. Since the software and the hardware of the transmitting unit 20 and the receiving unit 30 are not the features of this disclosure, they are not described in further detail for the sake of brevity.

The signal processor 10 includes a central processing unit (CPU) 11 and a storage medium 12 that is electrically connected to the CPU 11. The CPU 11 may include, but is not limited to, a single core processor, a multi-core processor, a dual-core mobile processor, a microprocessor, a microcontroller, a digital signal processor (DSP), a field-programmable gate array (FPGA) module, an application specific integrated circuit (ASIC), a radio-frequency integrated circuit (RFIC), etc. The storage medium 12 may be embodied using one or more of computer-readable storage mediums such as random access memory (RAM), read only memory (ROM), programmable ROM (PROM), flash memory, etc., and stores a plurality of algorithm instructions. When the CPU 11 executes the algorithm instructions, the CPU 11 performs the method of the present disclosure, which will be described later in detail.

It should be noted that in the following description, only one target object 9 is used to describe operations of the radar system 100 and the method of the present disclosure for the sake of brevity. Specifically, in this disclosure, calculation for angles of signals that are reflected by the target object 9 and are then received by the receiving antennas 3 (i.e., the DoAs of the reflection signals Rₓ) is considered as a spatial sparsity reconstruction problem, i.e., reconstructing sparse signals. In this disclosure, the calculation is performed using a compressed sensing (CS) technique, and employs a Kronecker orthogonal matching pursuit (OMP) method to find a sparse solution for an underdetermined linear system. In the Kronecker OMP method, a Kronecker dictionary Ṽ is defined to be a Kronecker product of two independent dictionaries.

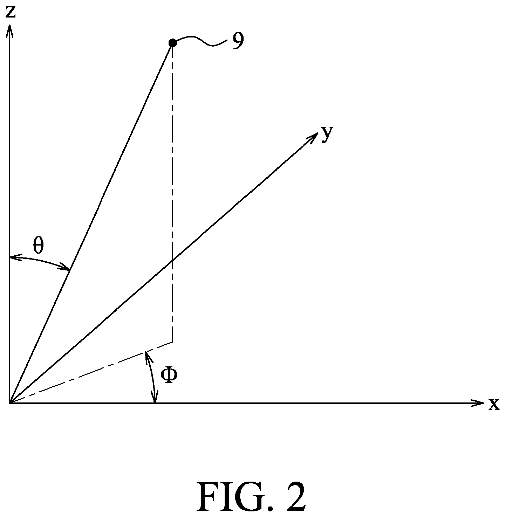

Referring further to Figure 2, the two independent dictionaries are defined as follows. For a number G of grid points in a spherical coordinate system where the target object 9 is able to be identified by the radar system 100, each of the grid points is defined by a polar angle (θ), which is an angle measured from a positive z-axis of the spherical coordinate system, and an azimuthal angle (φ), which is an angle measured from a positive x-axis of an x-y plane of the spherical coordinate system. An x-axis projected position *wₓ* of each of the grid points from the spherical coordinate system onto an x-axis of a Cartesian coordinate system (i.e., the x-axis of the x-y plane) is represented by equation 1 as follows: ${w}_{x} = cos ϕ sin θ$ (eq. 1), where the x-axis projected positions *wₓ* of the G grid points are collectively included in a first dictionary *Ṽₓ*. Similarly, a y-axis projected position *w_{y}* of each of the grid points from the spherical coordinate system onto a y-axis of the Cartesian coordinate system is represented by equation 2 as follows: ${w}_{y} = sin ϕ sin θ$ (eq. 2), where the y-axis projected positions *w_{y}* of the G grid points are collectively included in a second dictionary *Ṽ_{y}*. The Kronecker dictionary Ṽ is then defined to be the Kronecker product of the first dictionary *Ṽₓ* and the second dictionary *Ṽ_{y}* as shown in equation 3 as follows: ${V}^{˜} = {{V}^{˜}}_{x} ⊗ {{V}^{˜}}_{y}$ (eq. 3).

Specifically, the Kronecker dictionary Ṽ includes G² atoms. In this disclosure, each atom refers to a basic element in the Kronecker dictionary Ṽ, and is used to represent a linear combination of signals. The Kronecker dictionary Ṽ, also called Kronecker compressive sensing, is used in the present disclosure to construct a measurement matrix. In the present disclosure, estimations for the 2D-DoAs of the reflection signals Rₓ reflected by the target object 9 are obtained by finding a sparse solution of the measurement matrix that has a smallest residual through multiple iterations.

In order to reduce computational complexity of the Kronecker OMP, in one embodiment, a Joint Block Orthogonal Matching Pursuit (Joint BOMP) may be employed to perform estimations for the 2D-DoAs of the reflection signals Rₓ reflected by the target object 9. The Joint BOMP is adapted to process multiple relevant signals (also known as signal blocks) simultaneously. In this approach, the Kronecker dictionary Ṽ still includes G² atoms, but each atom is a matrix with a size of Lₓ×L_{y}, where Lₓ represents a maximum number of virtual antennas in the x-axis direction and L_{y} represents a maximum number of virtual antennas in the y-axis direction. The above approach is mainly to select, in each iteration, a most relevant atom, which has a greatest inner product with a signal residual, from among the atoms of the Kronecker dictionary Ṽ, and then, for the most relevant atom, to find out optimal coefficients by means of the least squares method for updating the signal residual. Iterations of this approach are performed until the signal residual reaches a certain threshold such that a sparse signal is sufficiently reconstructed.

However, the least squares method used in the Joint BOMP is complicated; therefore, in the following embodiment, a recursive inversion technology is employed to reduce computational complexity for obtaining the 2D-DoAs of the reflection signals Rₓ reflected by the target object 9.

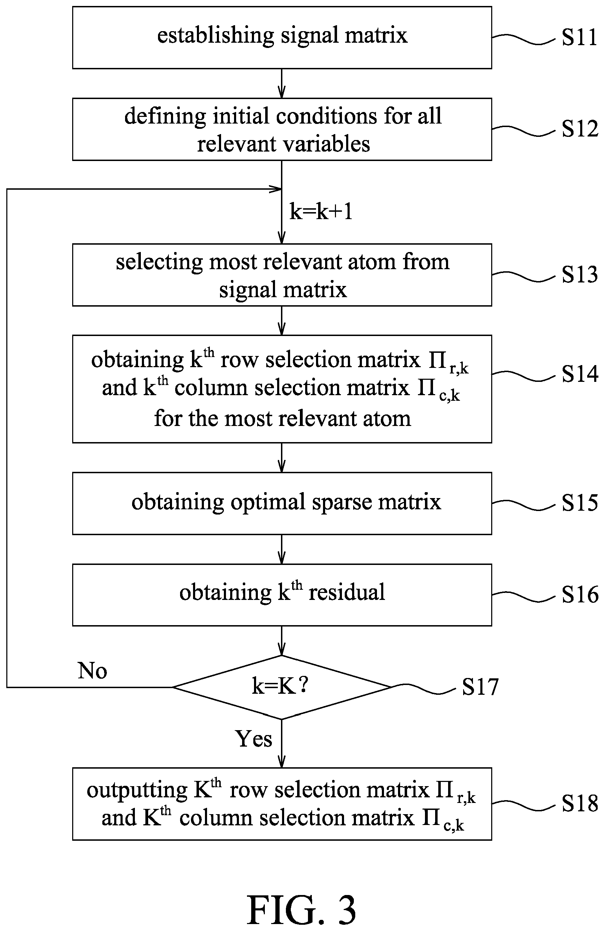

Referring to Figure 3, according to an embodiment of the disclosure, the method for reducing computational complexity in determining DoA for the radar system 100 is used for solving the measurement matrix of the 2D-DoAs of the reflection signals Rₓ reflected by the target object 9, and includes steps S11 to S18.

In step S11, the CPU 11 reads the first dictionary *Ṽₓ* and the second dictionary *Ṽ_{y}* that are defined as mentioned above, and inputs the first dictionary *Ṽₓ* and the second dictionary *Ṽ_{y}* into a signal matrix (Z), where the signal matrix (Z) is established based on the reflection signals Rₓ using a compressed sensing technique. Since a method of establishing the signal matrix (Z) is not the feature of this disclosure, it is not described in further detail for the sake of brevity. The signal matrix (Z) is expressed using equation 4 as follows: $Z = {{V}^{˜}}_{x} {P}^{˜} {{V}^{˜}}_{y}^{T} + {σ}_{n}^{2} É$ (eq. 4), where P̃ is a G×G sparse matrix; ${σ}_{n}^{2}$ represents noise power; *É* is an Einheits matrix (i.e., an identity matrix) with ones on the main diagonal and zeros elsewhere. Then, a row selection matrix and a column selection matrix may be further defined from the signal matrix (Z).

In step S12, the CPU 11 defines initial conditions for all relevant variables, including defining an initial matrix R₀ (i.e., an initial residual) to be the signal matrix (Z), defining an initial row selection matrix Π_{*r*,0}, an initial column selection matrix Π_{*c*,0}, an initial row selection subset Λ_{*r*,0}, and an initial column selection subset Λ_{*c*,0}, with each being an empty set, and setting an index k to be zero initially (i.e., k=0). Recursive computation will be performed for a number K of times, where the number K is a positive integer. In one example, in a k^{th} recursive computation, an atom at a position (*i,j*) in the signal matrix (Z) is defined as (*iₖ*, *jₖ*), where i=1~G, j=1~G. It should be noted that the number K may be set by a user based on different user needs (e.g., based on a desired computation time or a desired computation precision).

To describe in further detail, the recursive computation includes steps S13 to S17,and before the recursive computation is performed (i.e., right before step S13), the index k is incremented by one, until the recursive computation has been performed for K times.

In step S13, in the k^{th} recursive computation, the CPU 11 selects the most relevant atom, which has a greatest inner product with a (k-1)^{th} residual, from among the atoms of the signal matrix (Z) using equation 5 as follows: $\left({i}_{k}, {j}_{k}\right) = arg {max}_{\left(i, j\right) ∈ \left\{\left(1, 1\right),\left(1, 2\right),…,\left(G, G\right)\right\}} \left|{{V}^{˜}}_{x}^{H}{R}_{k - 1}{{V}^{˜}}_{y}^{*}\right|$ (eq. 5), where ${{V}^{˜}}_{x}^{H}$ represents a conjugate transpose of *Ṽₓ*, ${{V}^{˜}}_{y}^{∗}$ represents a conjugate of *Ṽ_{y}*, and *R*_{*k-*1} represents the (k-1)^{th} residual.

In step S14, in the k^{th} recursive computation, the CPU 11 obtains a k^{th} row selection subset Λ_{*r*,*k*}, a k^{th} column selection subset Λ_{*c*,*k*}, a k^{th} row selection matrix Π_{*r*,*k*} and a k^{th} column selection matrix Π*_{c,k}* for the most relevant atom using equations 6 to 9 as follows: ${Λ}_{r , k} = {Λ}_{r , k - 1} ∪ \left\{{i}_{k}\right\}$ (eq. 6) ${Λ}_{c , k} = {Λ}_{c , k - 1} ∪ \left\{{j}_{k}\right\}$ (eq. 7) ${Π}_{r , k} = \left[{Π}_{r , k - 1}, {{v}^{˜}}_{x}\left({{w}^{˜}}_{x , {i}_{k}}\right)\right]$ (eq. 8) ${Π}_{c , k} = \left[{Π}_{c , k - 1}, {{v}^{˜}}_{y}\left({{w}^{˜}}_{y , {j}_{k}}\right)\right]$ (eq. 9), where *ṽₓ*(*w̃_{x,iₖ}*) and *ṽ_{y}*(*w̃_{y,jₖ}*) are values in the first dictionary *Ṽₓ* and the second dictionary *Ṽ_{y}*, respectively. It should be noted that, from equations 6 to 9, the k^{th} row selection matrix, the k^{th} column selection matrix, the k^{th} row selection subset and the k^{th} column selection subset are obtained by expanding a (k-1)^{th} row selection matrix, a (k-1)^{th} column selection matrix, a (k-1)^{th} row selection subset and a (k-1)^{th} column selection subset, respectively.

In step S15, in the k^{th} recursive computation, the CPU 11 obtains an optimal sparse matrix *P̃ₖ* that has a smallest matrix norm with the signal matrix (Z) by calculating an equivalent least squares using a recursive inversion technique. Specifically, in this embodiment, the optimal sparse matrix *P̃ₖ* is obtained using equation 10 as follows: ${{P}^{˜}}_{k} = arg {min}_{{P}^{˜}} {\left‖Z-{Π}_{r , k}{P}^{˜}{Π}_{c , k}^{T}\right‖}_{F}$ (eq. 10).

During the process of solving equation 10, $Z - {Π}_{r , k} {P}^{˜} {Π}_{c , k}^{T}$ is set to be equal to "Γ" (i.e., $Γ = Z - {Π}_{r , k} {P}^{˜} {Π}_{c , k}^{T}$), where a Frobenius Norm of "Γ" is written as ∥Γ∥*_{F}*, which is equal to $\sqrt{tr \left({Γ}^{H}Γ\right)}$*.* Specifically, *tr*(·) is a trace operation that represents a sum of diagonal terms in a square matrix. Then, ∥Γ∥*_{F}* is squared to obtain *tr*(Γ*^{H}*Γ). Based on a global minimum criterion, in this embodiment, a first derivative of ${\left‖Z-{Π}_{r , k}{P}^{˜}{Π}_{c , k}^{T}\right‖}_{F}^{2}$ is set to be equal to zero, as shown in equation 11 as follows: $\frac{\partial {\left‖Γ\right‖}_{F}^{2}}{\partial {{p}^{˜}}_{k}^{∗}} = \frac{\partial tr \left({Γ}^{H}Γ\right)}{\partial {{p}^{˜}}_{k}^{∗}} = {Δ}_{k} {{p}^{˜}}_{k} - u = 0$ (eq. 11). That is, the goal is to solve equation 12: ${{p}^{˜}}_{k} = {Δ}_{k}^{- 1} u ,$ (eq. 12), and to solve equation 13: ${{P}^{˜}}_{k} = diag \left({{p}^{˜}}_{k}\right)$ (eq. 13). Specifically, *p̃ₖ* is a vector that includes non-zero elements, which may be expressed using equation 14 as follows: ${{p}^{˜}}_{k} = {\left[{{p}^{˜}}_{{i}_{1} , {j}_{1}},{{p}^{˜}}_{{i}_{2} , {j}_{2}},…,{{p}^{˜}}_{{i}_{k} , {j}_{k}}\right]}^{T}$ (eq. 14). In equation 11, u may be expressed using equation 15 as follows: $u = {\left[tr\left({Z}^{H}{Φ}_{{i}_{1} , {j}_{1}}\right), tr\left({Z}^{H}{Φ}_{{i}_{2} , {j}_{2}}\right),…, tr\left({Z}^{H}{Φ}_{{i}_{k} , {j}_{k}}\right)\right]}^{T}$ (eq. 15), where Φ*_{iᵢ,jⱼ}* represents basic elements of the signal matrix (Z).
In equation 11, Δ*ₖ* is defined in equation 16 as follows: $\begin{matrix}{Δ}_{k} = \left(\begin{matrix}tr \left({{Φ}_{{i}_{1} , {j}_{1}}}^{H}{Φ}_{{i}_{1} , {j}_{1}}\right) & & tr \left({{Φ}_{{i}_{1} , {j}_{1}}}^{H}{Φ}_{{i}_{2} , {j}_{2}}\right) & ⋯ & tr \left({{Φ}_{{i}_{1} , {j}_{1}}}^{H}{Φ}_{{i}_{K} , {j}_{K}}\right) \\ & ⋮ & & ⋱ & ⋮ \\ tr \left({{Φ}_{{i}_{K} , {j}_{K}}}^{H}{Φ}_{{i}_{1} , {j}_{1}}\right) & & tr \left({{Φ}_{{i}_{K} , {j}_{K}}}^{H}{Φ}_{{i}_{2} , {j}_{2}}\right) & ⋯ & tr \left({{Φ}_{{i}_{K} , {j}_{K}}}^{H}{Φ}_{{i}_{K} , {j}_{K}}\right)\end{matrix}\right) = \\ \left[\begin{matrix}{Δ}_{k - 1} & c \\ {c}^{H} & d\end{matrix}\right]\end{matrix}$ (eq. 16), where *c =* [*tr*(Φ_{*i*₁*,j*₁}*^{H}Φ_{iₖ,jₖ}*), *tr*(Φ_{*i*₂,*j*₂}*^{H}*Φ*_{iₖ,jₖ}*), ... , *tr*(*Φ*_{*iₖ₋*1*,jₖ₋*1}*^{H}*Φ*_{iₖ,jₖ}*)]*^{T},* and d = *tr*(Φ*_{iₖ,jₖ}^{H}*Φ*_{iₖ,jₖ}*).

It should be noted that, as shown in equation 16, the matrix Δ*ₖ* includes the matrix Δ_{*k*-1} in a previous recursive computation (i.e., a (k-1)^{th} recursive computation) and some new elements (e.g., c, c^{H}, d), forming a larger matrix than that in the previous recursive computation. Since the matrix Δ*ₖ* and the matrix Δ_{*k*-1} are both invertible matrices, according to a block inversion theorem described by Wang et al. in "A method of Ultra-Large-Scale Matrix Inversion Using Block Recursion", equation 16 may be represented using equation 17 as follows: ${Δ}_{k}^{- 1} = \left[\begin{matrix}{Δ}_{k - 1}^{- 1} + {Δ}_{k - 1}^{- 1} c {\left(d-{c}^{H}{Δ}_{k - 1}^{- 1}c\right)}^{- 1} {c}^{H} {Δ}_{k - 1}^{- 1} & - {Δ}_{k - 1}^{- 1} c {\left(d-{c}^{H}{Δ}_{k - 1}^{- 1}c\right)}^{- 1} \\ - {\left(d-{c}^{H}{Δ}_{k - 1}^{- 1}c\right)}^{- 1} {c}^{H} {Δ}_{k - 1}^{- 1} & {\left(d-{c}^{H}{Δ}_{k - 1}^{- 1}c\right)}^{- 1}\end{matrix}\right]$ (eq. 17).

During the process of solving equation 12 for the k^{th} recursive computation, it is required to obtain an inverse matrix ${Δ}_{k}^{- 1}$ of the matrix Δ*ₖ*. In this embodiment, the inverse matrix ${Δ}_{k}^{- 1}$ may be obtained based on a previous inverse matrix ${Δ}_{k - 1}^{- 1}$ of the previous recursive computation, without the need of performing inversion operation for the matrix Δ*ₖ*. That is to say, the inverse matrix ${Δ}_{k}^{- 1}$ may be obtained more efficiently based on known matrices. Similarly, a next inverse matrix ${Δ}_{k + 1}^{- 1}$ of a (k+1)^{th} recursive computation may be obtained based on the inverse matrix ${Δ}_{k}^{- 1}$*,* a further next inverse matrix ${Δ}_{k + 2}^{- 1}$ of a (k+2)^{th} recursive computation may be obtained based on the inverse matrix ${Δ}_{k + 1}^{- 1}$*,* and so on. Therefore, only an inverse matrix of the first recursive computation (i.e., when the index k is equal to one) needs to be calculated using inversion operation, and for the k^{th} recursive computation where the index k is greater than one, the inverse matrix ${Δ}_{k}^{- 1}$ may be obtained based on the previous inverse matrix ${Δ}_{k - 1}^{- 1}$ of the previous recursive computation using equation 17. As such, through the number K times of the recursive computation, the computational complexity for obtaining the inverse matrix is reduced to calculating a 2×2 matrix instead of performing inversion operation, thus reducing the computation complexity by a few orders.

In step S16, the CPU 11 obtains a k^{th} residual based on the optimal sparse matrix *P̃ₖ* using equation 18 as follows: ${R}_{k} = Z - {Π}_{r , k} {{P}^{˜}}_{k} {Π}_{c , k}^{T}$ (eq. 18).

Then, in step S17, the CPU 11 determines whether the index k has reached the number K (i.e., determines whether k=K). When the determination is affirmative, the flow proceeds to step S18; otherwise, the index k is incremented by one, and the flow goes back to step S13 to perform the recursive computation for a next time.

After the K^{th} recursive computation is performed (i.e., after the recursive computation is performed for the K^{th} time, when the determination in step S17 is affirmative), the flow proceeds to step S18, where the CPU 11 outputs a K^{th} row selection matrix Π_{*r*,*K*} and a K^{th} column selection matrix Π*_{c,K}.*

The CPU 11 may then reconstruct the sparse signal based on the K^{th} row selection matrix Π_{*r*,*K*} and the K^{th} column selection matrix Π_{*c*,*K*}, and obtain the 2D-DoAs of the reflection signals Rₓ reflected by the target object 9 using MUSIC through phase compensation. Since the reconstruction of the sparse signal is not the feature of this disclosure, and details of processing are not limited to particular existing methods, it will not be described in further detail.

In summary, the present disclosure obtains the sparse solution for the underdetermined linear system based on the CS technology and the Joint BOMP, so as to perform the estimation for the 2D-DoAs. Moreover, the present disclosure further uses the recursive inversion technology to calculate the equivalent least squares for obtaining the optimal sparse matrix. Each of the optimal sparse matrices thus obtained is efficiently calculated based on a known matrix (as in step S15). As such, the present disclosure does not require to use the spatial smoothing algorithm to divide the matrix or to take an average, and does not require to solve the least squares using pseudo-inverse. Therefore, the computational complexity may be reduced by a few orders without reducing the effective degrees of freedom (DoFs).

## Claims

1. A method for reducing computational complexity in determining direction of arrival, DOA, for a radar system (100), the method implemented by the radar system (100), the radar system (100) including a plurality of antennas that are configured to receive a plurality of reflection signals reflected from a target object (9), and a signal processor (10) that is configured to estimate a plurality of DoAs corresponding respectively to the plurality of reflection signals received by the plurality of antennas, the method comprising:
establishing a signal matrix based on the plurality of reflection signals using a compressed sensing technique, and defining an initial row selection matrix and an initial column selection matrix based on the signal matrix, where the signal matrix includes a plurality of atoms;
setting each of the initial row selection matrix and the initial column selection matrix to be an empty set, and setting an initial residual to be the signal matrix, and performing recursive computation for a number K of times, wherein an index k is initialized at zero, and for each of the number K of times of the recursive computation, before the recursive computation is performed, the index k is incremented by one,
wherein for a k^{th} time the recursive computation is performed, the recursive computation includes
selecting a most relevant atom, which has a greatest inner product with a (k-1)^{th} residual, from among the plurality of atoms of the signal matrix,
obtaining a k^{th} row selection matrix and a k^{th} column selection matrix for the most relevant atom by expanding a (k-1)^{th} row selection matrix and a (k-1)^{th} column selection matrix,
obtaining an optimal sparse matrix that has a smallest matrix norm with the signal matrix by calculating an equivalent least squares using a recursive inversion technique, and
obtaining a k^{th} residual based on the optimal sparse matrix, and in response to the index k being less than the number K, performing the recursive computation for a next time; and
after performing the recursive computation for the K^{th} time, outputting a K^{th} row selection matrix and a K^{th} column selection matrix so as to obtain the plurality of DoAs through phase compensation,
wherein the number K is a positive integer.

2. The method as claimed in claim 1, wherein said obtaining an optimal sparse matrix that has a smallest matrix norm with the signal matrix includes solving a following formula: ${{P}^{˜}}_{k} = arg {min}_{{P}^{˜}} {\left‖Z-{Π}_{r , k}{P}^{˜}{Π}_{c , k}^{T}\right‖}_{F} ,$ where ∥·∥*_{F}* represents a Frobenius Norm, Z represents the signal matrix, Π*_{r,k}* represents the k^{th} row selection matrix, Π*_{c,k}* represents the k^{th} column selection matrix, *P̃* represents a sparse matrix with a size of GxG, and *P̃ₖ* represents the optimal sparse matrix for the k^{th} recursive computation.

3. The method as claimed in claim 2, wherein said obtaining an optimal sparse matrix that has a smallest matrix norm with the signal matrix further includes setting a first derivative of ${\left‖Z-{Π}_{r , k}{P}^{˜}{Π}_{c , k}^{T}\right‖}_{F}^{2}$ equal to zero.

4. The method as claimed in claim 3, wherein said obtaining an optimal sparse matrix that has a smallest matrix norm with the signal matrix further includes solving ${{p}^{˜}}_{k} = {Δ}_{k}^{- 1} u$*,* and solving *P̃ₖ = diag*(*p̃ₖ*), wherein ${{p}^{˜}}_{k} = {\left[{{p}^{˜}}_{{i}_{1} , {j}_{1}},{{p}^{˜}}_{{i}_{2} , {j}_{2}},…,{{p}^{˜}}_{{i}_{k} , {j}_{k}}\right]}^{T} ,$ $u = {\left[tr\left({Z}^{H}{Φ}_{{i}_{1} , {j}_{1}}\right),tr\left({Z}^{H}{Φ}_{{i}_{2} , {j}_{2}}\right),…,tr\left({Z}^{H}{Φ}_{{i}_{k} , {j}_{k}}\right)\right]}^{T} ,$
where iₖ, jₖ ∈ (1,1),(1,2),... and iₖ, jₖ is a position of an atom in the signal matrix ,
where tr(.) is a trace operation that represents a sum of diagonal terms in a square matrix,
Φ*_{iᵢ,jⱼ}* represents basic elements of the signal matrix, $\begin{matrix}{Δ}_{k} = \left(\begin{matrix}tr \left({{Φ}_{{i}_{1} , {j}_{1}}}^{H}{Φ}_{{i}_{1} , {j}_{1}}\right) & & tr \left({{Φ}_{{i}_{1} , {j}_{1}}}^{H}{Φ}_{{i}_{2} , {j}_{2}}\right) & ⋯ & tr \left({{Φ}_{{i}_{1} , {j}_{1}}}^{H}{Φ}_{{i}_{K} , {j}_{K}}\right) \\ & ⋮ & & ⋱ & ⋮ \\ tr \left({{Φ}_{{i}_{K} , {j}_{K}}}^{H}{Φ}_{{i}_{1} , {j}_{1}}\right) & & tr \left({{Φ}_{{i}_{K} , {j}_{K}}}^{H}{Φ}_{{i}_{2} , {j}_{2}}\right) & ⋯ & tr \left({{Φ}_{{i}_{K} , {j}_{K}}}^{H}{Φ}_{{i}_{K} , {j}_{K}}\right)\end{matrix}\right) = \\ \left[\begin{matrix}{Δ}_{k - 1} & c \\ {c}^{H} & d\end{matrix}\right] ,\end{matrix}$ $c = {\left[tr\left({{Φ}_{{i}_{1} , {j}_{1}}}^{H}{Φ}_{{i}_{k} , {j}_{k}}\right), tr\left({{Φ}_{{i}_{2} , {j}_{2}}}^{H}{Φ}_{{i}_{k} , {j}_{k}}\right),…, tr\left({{Φ}_{{i}_{k - 1} , {j}_{k - 1}}}^{H}{Φ}_{{i}_{k} , {j}_{k}}\right)\right]}^{T}$ , and $d = tr \left({{Φ}_{{i}_{k} , {j}_{k}}}^{H}{Φ}_{{i}_{k} , {j}_{k}}\right) .$

5. The method as claimed in claim 4, wherein for the k^{th} recursive computation where the index k is greater than one, Δ*ₖ* is solved by setting: ${Δ}_{k}^{- 1} = \left[\begin{matrix}{Δ}_{k - 1}^{- 1} + {Δ}_{k - 1}^{- 1} c {\left(d-{c}^{H}{Δ}_{k - 1}^{- 1}c\right)}^{- 1} {c}^{H} {Δ}_{k - 1}^{- 1} & - {Δ}_{k - 1}^{- 1} c {\left(d-{c}^{H}{Δ}_{k - 1}^{- 1}c\right)}^{- 1} \\ - {\left(d-{c}^{H}{Δ}_{k - 1}^{- 1}c\right)}^{- 1} {c}^{H} {Δ}_{k - 1}^{- 1} & {\left(d-{c}^{H}{Δ}_{k - 1}^{- 1}c\right)}^{- 1}\end{matrix}\right] .$

6. The method as claimed in any one of claims 1 to 5, wherein said obtaining a k^{th} residual based on the optimal sparse matrix includes setting ${R}_{k} = Z - {Π}_{r , k} {{P}^{˜}}_{k} {Π}_{c , k}^{T}$ , wherein *Rₖ* represents the k^{th} residual, Z represents the signal matrix, *P̃ₖ* represents the optimal sparse matrix for the k^{th} recursive computation, Π*_{r,k}* represents the k^{th} row selection matrix, and Π*_{c,k}* represents the k^{th} column selection matrix.

7. The method as claimed in any one of claims 1 to 6, wherein said selecting a most relevant atom from the plurality of atoms of the signal matrix includes selecting the most relevant atom using a following equation: $\left({i}_{k}, {j}_{k}\right) = arg {max}_{\left(i, j\right) ∈ \left\{\left(1, 1\right),\left(1, 2\right),…,\left(G, G\right)\right\}} \left|{{V}^{˜}}_{x}^{H}{R}_{k - 1}{{V}^{˜}}_{y}^{*}\right| ,$ wherein *Ṽₓ* is a dictionary that represents projections of a plurality of grid points from a spherical coordinate system onto an x-axis of a Cartesian coordinate, ${{V}^{˜}}_{x}^{H}$ represents a conjugate transpose of *Ṽₓ, Ṽ_{y}* is another dictionary that represents projections of the plurality of grid points from the spherical coordinate system onto a y-axis of the Cartesian coordinate, ${{V}^{˜}}_{y}^{∗}$ represents a conjugate of *Ṽ_{y}*, and *R*_{*k*-1} represents the (k-1)^{th} residual.

8. A radar system (100) comprising:
a plurality of antennas configured to receive a plurality of reflection signals reflected from a target object (9); and
a signal processor (10) configured to estimate a plurality of directions of arrival, DoAs, corresponding respectively to the plurality of reflection signals received by the plurality of antennas by,
establishing a signal matrix based on the plurality of reflection signals using a compressed sensing technique, and defining an initial row selection matrix and an initial column selection matrix based on the signal matrix, where the signal matrix includes a plurality of atoms,
setting each of the initial row selection matrix and the initial column selection matrix to be an empty set, and setting an initial residual to be the signal matrix, and performing recursive computation for a number K of times, wherein an index k is initialized at zero, and for each of the number K of times of the recursive computation, before the recursive computation is performed, the index k is incremented by one,
wherein for a k^{th} time the recursive computation is performed, the recursive computation includes
selecting a most relevant atom, which has a greatest inner product with a (k-1)^{th} residual, from among the plurality of atoms of the signal matrix,
obtaining a k^{th} row selection matrix and a k^{th} column selection matrix for the most relevant atom by expanding a (k-1)^{th} row selection matrix and a (k-1)^{th} column selection matrix,
obtaining an optimal sparse matrix that has a smallest matrix norm with the signal matrix by calculating an equivalent least squares using a recursive inversion technique, and
obtaining a k^{th} residual based on the optimal sparse matrix, and in response to the index k being less than the number K, performing the recursive computation for a next time, and
after performing the recursive computation for the K^{th} time, outputting a K^{th} row selection matrix and a K^{th} column selection matrix so as to obtain the plurality of DoAs through phase compensation,
wherein the number K is a positive integer.

## Patentansprüche

1. Verfahren zum Reduzieren einer Rechenkomplexität beim Bestimmen einer Ankunftsrichtung, DoA, für ein Radarsystem (100), wobei das Verfahren durch das Radarsystem (100) implementiert wird, wobei das Radarsystem (100) eine Mehrzahl von Antennen, die dazu konfiguriert sind, eine Mehrzahl von Reflexionssignalen zu empfangen, die von einem Zielobjekt (9) reflektiert werden, und einen Signalprozessor (10) aufweist, der dazu konfiguriert ist, ein Mehrzahl von DoAs zu schätzen, die jeweils der Mehrzahl von Reflexionssignalen entsprechen, die von der Vielzahl von Antennen empfangen werden, wobei das Verfahren folgende Schritte aufweist:
Einrichten einer Signalmatrix basierend auf der Mehrzahl von Reflexionssignalen unter Verwendung einer komprimierten Erfassungstechnik und Definieren einer Anfangszeilenauswahlmatrix und einer Anfangsspaltenauswahlmatrix basierend auf der Signalmatrix, wobei die Signalmatrix eine Mehrzahl von Atomen aufweist;
Einstellen sowohl der Anfangszeilenauswahlmatrix als auch der Anfangsspaltenauswahlmatrix auf einen leeren Satz und Einstellen eines Anfangsrests auf die Signalmatrix und Durchführen einer rekursiven Berechnung für eine Zahl K von Malen, wobei ein Index k auf null initialisiert wird und für jedes der Zahl K von Malen der rekursiven Berechnung, bevor die rekursive Berechnung durchgeführt wird, der Index k um Eins inkrementiert wird,
wobei für ein k-tes Mal, das die rekursive Berechnung durchgeführt wird, die rekursive Berechnung folgende Schritte aufweist:
Auswählen eines relevantesten Atoms, das ein größtes inneres Produkt mit einem (k-1)^{-ten} Rest aufweist, aus der Mehrzahl von Atomen der Signalmatrix,
Erhalten einer k-ten Zeilenauswahlmatrix und einer k-ten Spaltenauswahlmatrix für das relevanteste Atom durch Erweitern einer (k-1)^{-ten} Zeilenauswahlmatrix und einer (k-1)^{-ten} Spaltenauswahlmatrix,
Erhalten einer optimalen dünnbesetzten Matrix, die eine kleinste Matrixnorm mit der Signalmatrix aufweist, durch Berechnen von äquivalenten kleinsten Quadraten unter Verwendung einer rekursiven Inversionstechnik und
Erhalten eines k-ten Rests basierend auf der optimalen dünnbesetzten Matrix und als Reaktion darauf, dass der Index k kleiner als die Zahl K ist, Durchführen der rekursiven Berechnung für ein nächstes Mal; und
nach dem Durchführen der rekursiven Berechnung für das K-te Mal, Ausgeben einer K-ten Zeilenauswahlmatrix und einer K-ten Spaltenauswahlmatrix, um die Mehrzahl von DoAs durch Phasenkompensation zu erhalten,
wobei die Zahl K eine positive Ganzzahl ist.

2. Verfahren gemäß Anspruch 1, wobei das Erhalten einer optimalen dünnbesetzten Matrix, die eine kleinste Matrixnorm mit der Signalmatrix aufweist, ein Lösen folgender Formel aufweist: ${{P}^{˜}}_{k} = arg {min}_{{P}^{˜}} {\left‖Z-{Π}_{r , k}{P}^{˜}{Π}_{c , k}^{T}\right‖}_{F} ,$ wobei ||·||*_{F}* eine Frobenius-Norm darstellt, Z die Signalmatrix darstellt, Π*_{r,k}* die k-te Zeilenauswahlmatrix darstellt, Π*_{c,k}* die k-te Spaltenauswahlmatrix darstellt, *P̃* eine dünnbesetzte Matrix mit einer Größe von GxG darstellt und *P̃ₖ* die optimale dünnbesetzte Matrix für die k-te rekursive Berechnung darstellt.

3. Verfahren gemäß Anspruch 2, wobei das Erhalten einer optimalen dünnbesetzten Matrix, die eine kleinste Matrixnorm mit der Signalmatrix aufweist, ferner ein Einstellen einer ersten Ableitung von ${\left‖Z-{Π}_{r , k}{P}^{˜}{Π}_{c , k}^{T}\right‖}_{F}^{2}$ gleich Null aufweist.

4. Verfahren gemäß Anspruch 3, wobei das Erhalten einer optimalen dünnbesetzten Matrix, die eine kleinste Matrixnorm mit der Signalmatrix aufweist, ferner ein Lösen von ${{p}^{˜}}_{k} = {Δ}_{k}^{- 1} u$ und ein Lösen von *P̃ₖ = diag*(*p̃ₖ*) aufweist, wobei ${{p}^{˜}}_{k} = {\left[{{p}^{˜}}_{{i}_{1} , {j}_{1}},{{p}^{˜}}_{{i}_{2} , {j}_{2}},…,{{p}^{˜}}_{{i}_{k} , {j}_{k}}\right]}^{T} ,$ $u = {\left[tr\left({Z}^{H}{Φ}_{{i}_{1} , {j}_{1}}\right), tr\left({Z}^{H}{Φ}_{{i}_{2} , {j}_{2}}\right),…, tr\left({Z}^{H}{Φ}_{{i}_{k} , {j}_{k}}\right)\right]}^{T} ,$
wobei iₖ, jₖ ∈ (1,1), (1,2),... und iₖ, jₖ eine Position eines Atoms in der Signalmatrix ist,
wobei tr(.) eine Nachverfolgungsoperation ist, die eine Summe von diagonalen Termen in einer quadratischen Matrix darstellt,
Φ*ᵢᵢ*,*jⱼ* Grundelemente der Signalmatrix darstellt, ${Δ}_{k} = \left(\begin{matrix}tr \left({{Φ}_{{i}_{1} , {j}_{1}}}^{H}{Φ}_{{i}_{1} , {j}_{1}}\right) tr \left({{Φ}_{{i}_{1} , {j}_{1}}}^{H}{Φ}_{{i}_{2} , {j}_{2}}\right) & ⋯ & tr \left({{Φ}_{{i}_{1} , {j}_{1}}}^{H}{Φ}_{{i}_{K} , {j}_{K}}\right) \\ ⋮ & ⋱ & ⋮ \\ tr \left({{Φ}_{{i}_{K} , {j}_{K}}}^{H}{Φ}_{{i}_{1} , {j}_{1}}\right) tr \left({{Φ}_{{i}_{K} , {j}_{K}}}^{H}{Φ}_{{i}_{2} , {j}_{2}}\right) & ⋯ & tr \left({{Φ}_{{i}_{K} , {j}_{K}}}^{H}{Φ}_{{i}_{K} , {j}_{K}}\right)\end{matrix}\right) = \left[\begin{matrix}{Δ}_{k - 1} & c \\ {c}^{H} & d\end{matrix}\right] ,$ $c = {\left[tr\left({{Φ}_{{i}_{1} , {j}_{1}}}^{H}{Φ}_{{i}_{k} , {j}_{k}}\right), tr\left({{Φ}_{{i}_{2} , {j}_{2}}}^{H}{Φ}_{{i}_{k} , {j}_{k}}\right),…, tr\left({{Φ}_{{i}_{k - 1} , {j}_{k - 1}}}^{H}{Φ}_{{i}_{k} , {j}_{k}}\right)\right]}^{T}$
und $d = tr \left({{Φ}_{{i}_{k} , {j}_{k}}}^{H}{Φ}_{{i}_{k} , {j}_{k}}\right) .$

5. Verfahren gemäß Anspruch 4, wobei für die k-te rekursive Berechnung, bei der der Index k größer als Eins ist, Δ*ₖ* gelöst wird durch Einstellen von: ${Δ}_{k}^{- 1} = \left[\begin{matrix}{Δ}_{k - 1}^{- 1} + {Δ}_{k - 1}^{- 1} c {\left(d-{c}^{H}{Δ}_{k - 1}^{- 1}c\right)}^{- 1} {c}^{H} {Δ}_{k - 1}^{- 1} & - {Δ}_{k - 1}^{- 1} c {\left(d-{c}^{H}{Δ}_{k - 1}^{- 1}c\right)}^{- 1} \\ - {\left(d-{c}^{H}{Δ}_{k - 1}^{- 1}c\right)}^{- 1} {c}^{H} {Δ}_{k - 1}^{- 1} & {\left(d-{c}^{H}{Δ}_{k - 1}^{- 1}c\right)}^{- 1}\end{matrix}\right] .$

6. Verfahren gemäß einem der Ansprüche 1 bis 5, wobei das Erhalten eines k-ten Rests basierend auf der optimalen dünnbesetzten Matrix ein Einstellen von ${R}_{k} = Z - {Π}_{r , k} {{P}^{˜}}_{k} {Π}_{c , k}^{T}$ aufweist, wobei *Rₖ* den k-ten Rest darstellt, Z die Signalmatrix darstellt, *P̃ₖ* die optimale dünnbesetzte Matrix für die k-te rekursive Berechnung darstellt, Π*_{r,k}* die k-te Zeilenauswahlmatrix darstellt und Π*_{c,k}* die k-te Spaltenauswahlmatrix darstellt.

7. Verfahren gemäß einem der Ansprüche 1 bis 6, wobei das Auswählen eines relevantesten Atoms aus der Mehrzahl von Atomen der Signalmatrix ein Auswählen des relevantesten Atoms unter Verwendung folgender Gleichung aufweist: $\left({i}_{k}, {j}_{k}\right) = arg {max}_{\left(i, j\right) ∈ \left\{\left(1, 1\right),\left(1, 2\right),…,\left(G, G\right)\right\}} \left|{{V}^{˜}}_{x}^{H}{R}_{k - 1}{{V}^{˜}}_{y}^{*}\right| ,$ wobei *Ṽₓ* ein Wörterbuch ist, das Projektionen einer Mehrzahl von Gitterpunkten von einem sphärischen Koordinatensystem auf eine x-Achse einer kartesischen Koordinate darstellt, ${{V}^{˜}}_{x}^{H}$ eine konjugierte Transponierte von *Ṽₓ* darstellt, *Ṽ_{y}* ein anderes Wörterbuch ist, das Projektionen der Mehrzahl von Gitterpunkten von dem sphärischen Koordinatensystem auf eine y-Achse der kartesischen Koordinate darstellt, ${{V}^{˜}}_{y}^{∗}$ eine Konjugierte von *Ṽ_{y}* darstellt und *R*_{*k*-1} den (k-1)^{-ten} Rest darstellt.

8. Radarsystem (100), das folgende Merkmale aufweist:
eine Mehrzahl von Antennen, die dazu konfiguriert sind, eine Mehrzahl von Reflexionssignalen zu empfangen, die von einem Zielobjekt (9) reflektiert werden; und
einen Signalprozessor (10), der dazu konfiguriert ist, eine Mehrzahl von Ankunftsrichtungen, DoAs, zu schätzen, die jeweils der Mehrzahl von Reflexionssignalen entsprechen, die von der Mehrzahl von Antennen empfangen werden, durch
Einrichten einer Signalmatrix basierend auf der Mehrzahl von Reflexionssignalen unter Verwendung einer komprimierten Erfassungstechnik und Definieren einer Anfangszeilenauswahlmatrix und einer Anfangsspaltenauswahlmatrix basierend auf der Signalmatrix, wobei die Signalmatrix eine Mehrzahl von Atomen aufweist,
Einstellen sowohl der Anfangszeilenauswahlmatrix als auch der Anfangsspaltenauswahlmatrix auf einen leeren Satz und Einstellen eines Anfangsrests auf die Signalmatrix und Durchführen einer rekursiven Berechnung für eine Zahl K von Malen, wobei ein Index k auf null initialisiert wird und für jedes der Zahl K von Malen der rekursiven Berechnung, bevor die rekursive Berechnung durchgeführt wird, der Index k um Eins inkrementiert wird,
wobei für ein k-tes Mal, das die rekursive Berechnung durchgeführt wird, die rekursive Berechnung folgende Schritte aufweist:
Auswählen eines relevantesten Atoms, das ein größtes inneres Produkt mit einem (k-1)^{-ten} Rest aufweist, aus der Mehrzahl von Atomen der Signalmatrix,
Erhalten einer k-ten Zeilenauswahlmatrix und einer k-ten Spaltenauswahlmatrix für das relevanteste Atom durch Erweitern einer (k-1)^{-ten} Zeilenauswahlmatrix und einer (k-1)^{-ten} Spaltenauswahlmatrix,
Erhalten einer optimalen dünnbesetzten Matrix, die eine kleinste Matrixnorm mit der Signalmatrix aufweist, durch Berechnen von äquivalenten kleinsten Quadrate unter Verwendung einer rekursiven Inversionstechnik und
Erhalten eines k-ten Rests basierend auf der optimalen dünnbesetzten Matrix und als Reaktion darauf, dass der Index k kleiner als die Zahl K ist, Durchführen der rekursiven Berechnung für ein nächstes Mal, und
nach dem Durchführen der rekursiven Berechnung für das K-te Mal, Ausgeben einer K-ten Zeilenauswahlmatrix und einer K-ten Spaltenauswahlmatrix, um die Mehrzahl von DoAs durch Phasenkompensation zu erhalten,
wobei die Zahl K eine positive Ganzzahl ist.

## Revendications

1. Procédé de réduction de complexité de calcul pour déterminer une direction d'arrivée, DOA, pour un système radar (100), le procédé étant mis en œuvre par le système radar (100), le système radar (100) incluant une pluralité d'antennes qui sont configurées pour recevoir une pluralité de signaux de réflexion renvoyés par un objet cible (9), et un processeur de signal (10) qui est configuré pour estimer une pluralité de DOA correspondant respectivement à la pluralité de signaux de réflexion reçus par la pluralité d'antennes, le procédé comprenant :
l'établissement d'une matrice de signal sur la base de la pluralité de signaux de réflexion en utilisant une technique de détection compressive, et la définition d'une matrice de sélection de ligne initiale et d'une matrice de sélection de colonne initiale sur la base de la matrice de signal,
où la matrice de signal inclut une pluralité d'atomes ;
la définition de chacune de la matrice de sélection de ligne initiale et de la matrice de sélection de colonne initiale comme un étant ensemble vide, et la définition d'un résidu initial comme étant la matrice de signal, et en effectuant un calcul récursif pour un nombre K de fois, dans lequel un indice k est initialisé à zéro, et pour chacun des nombres K de fois du calcul récursif, avant que le calcul récursif ne soit effectué, l'indice k est incrémenté de un,
dans lequel, lorsque le calcul récursif est effectué pour la k^{ième} fois, le calcul récursif inclut
la sélection, d'un atome le plus pertinent, qui présente le produit scalaire avec un (k-1)^{ième} résidu le plus grand, parmi la pluralité d'atomes de la matrice de signal,
l'obtention d'une matrice de sélection de la k^{ième} ligne et une matrice de sélection de la k^{ième} colonne pour l'atome le plus pertinent en développant une matrice de sélection de la (k-1)^{ième} ligne et une matrice de sélection de la (k-1)^{ième} colonne,
l'obtention d'une matrice creuse optimale qui présente une norme la plus faible avec la matrice de signal, en calculant une valeur équivalente des moindres carrés en utilisant une technique d'inversion récursive, et
l'obtention d'un k^{ième} résidu sur la base de la matrice creuse optimale, et, en réponse au fait que l'indice k est inférieur au nombre K, la réalisation du calcul récursif pour une fois de plus ; et
après avoir effectué le calcul récursif pour la k^{ième} fois, générer une k^{ième} matrice de sélection de ligne et une k^{ième} matrice de sélection de colonne afin d'obtenir la pluralité de DoA par compensation de phase,
dans lequel le nombre K est un nombre entier positif.

2. Procédé selon la revendication 1, dans lequel ladite obtention d'une matrice creuse optimale qui présente la plus petite norme matricielle avec la matrice de signal inclut la résolution de la formule suivante : ${{P}^{˜}}_{k} = arg {min}_{{P}^{˜}} {\left‖Z-{π}_{r , k}{P}^{˜}{π}_{c , k}^{T}\right‖}_{F} ,$ où ||·||*_{F}* représente la norme de Frobenius, représente la matrice de signal, π_{*r*,*k*} représente la k^{ième} matrice de sélection de ligne, π_{*c*,*k*} représente la k^{ième} matrice de sélection de colonne, *P̃* représente une matrice creuse de taille G×G, et ${{P}_{k}}^{˜}$ représente la matrice creuse optimale pour le k^{ième} calcul récursif.

3. Procédé selon la revendication 2, dans lequel ladite obtention d'une matrice creuse optimale qui présente une plus petite norme matricielle avec la matrice de signal inclut en outre la définition d'une première dérivée de ${\left‖Z-{π}_{r , k}{P}^{˜}{π}_{c , k}^{T}\right‖}_{F}^{2}$ égale à zéro.

4. Procédé selon la revendication 3, dans lequel ladite obtention d'une matrice creuse optimale qui présente une plus petite norme matricielle avec la matrice de signal inclut en outre la résolution de ${{p}^{˜}}_{k} = {Δ}_{k}^{- 1} u$, et la résolution de *P̃ₖ= diag* (*p̃ₖ*)*,* dans laquelle ${{p}^{˜}}_{k} = {\left[{{p}^{˜}}_{{i}_{1} , {j}_{1}},{{p}^{˜}}_{{i}_{2} , {j}_{2}},…,{{p}^{˜}}_{{i}_{k} , {j}_{k}}\right]}^{T} ,$ $u = {\left[tr\left({Z}^{H}{Φ}_{{i}_{1} , {j}_{1}}\right), tr\left({Z}^{H}{Φ}_{{i}_{2} , {j}_{2}}\right),…, tr\left({Z}^{H}{Φ}_{{i}_{k} , {j}_{k}}\right)\right]}^{T} ,$
où iₖ, jₖ ∈ (1,1), (1,2),... et iₖ, jₖ désignent une position d'un atome dans la matrice de signal, où tr(.) est une opération de trace qui représente une somme de termes diagonaux dans une matrice carrée,
Φ*_{iᵢ,jⱼ}* représente les éléments fondamentaux de la matrice de signal, ${Δ}_{k} = \left(\begin{matrix}tr \left({{Φ}_{{i}_{1} , {j}_{1}}}^{H}{Φ}_{{i}_{1} , {j}_{1}}\right) tr \left({{Φ}_{{i}_{1} , {j}_{1}}}^{H}{Φ}_{{i}_{2} , {j}_{2}}\right) & ⋯ & tr \left({{Φ}_{{i}_{1} , {j}_{1}}}^{H}{Φ}_{{i}_{K} , {j}_{K}}\right) \\ ⋮ & ⋱ & ⋮ \\ tr \left({{Φ}_{{i}_{K} , {j}_{K}}}^{H}{Φ}_{{i}_{1} , {j}_{1}}\right) tr \left({{Φ}_{{i}_{K} , {j}_{K}}}^{H}{Φ}_{{i}_{2} , {j}_{2}}\right) & ⋯ & tr \left({{Φ}_{{i}_{K} , {j}_{K}}}^{H}{Φ}_{{i}_{K} , {j}_{K}}\right)\end{matrix}\right) = \left[\begin{matrix}{Δ}_{k - 1} & c \\ {c}^{H} & d\end{matrix}\right] ,$ $c = {\left[tr\left({{Φ}_{{i}_{1} , {j}_{1}}}^{H}{Φ}_{{i}_{k} , {j}_{k}}\right), tr\left({{Φ}_{{i}_{2} , {j}_{2}}}^{H}{Φ}_{{i}_{k} , {j}_{k}}\right),…, tr\left({{Φ}_{{i}_{k - 1} , {j}_{k - 1}}}^{H}{Φ}_{{i}_{k} , {j}_{k}}\right)\right]}^{T} ,$
et $d = tr \left({{Φ}_{{i}_{k} , {j}_{k}}}^{H}{Φ}_{{i}_{k} , {j}_{k}}\right) .$

5. Procédé selon la revendication 4, dans lequel, pour le k^{ième} calcul récursif, où l'indice k est supérieur à un, *_{Δk}* est résolue en définissant : ${Δ}_{k}^{- 1} = \left[\begin{matrix}{Δ}_{k - 1}^{- 1} + {Δ}_{k - 1}^{- 1} c {\left(d-{c}^{H}{Δ}_{k - 1}^{- 1}c\right)}^{- 1} {c}^{H} {Δ}_{k - 1}^{- 1} & - {Δ}_{k - 1}^{- 1} c {\left(d-{c}^{H}{Δ}_{k - 1}^{- 1}c\right)}^{- 1} \\ - {\left(d-{c}^{H}{Δ}_{k - 1}^{- 1}c\right)}^{- 1} {c}^{H} {Δ}_{k - 1}^{- 1} & {\left(d-{c}^{H}{Δ}_{k - 1}^{- 1}c\right)}^{- 1}\end{matrix}\right] .$

6. Procédé selon l'une quelconque des revendications 1 à 5, dans lequel ladite obtention d'un k^{ième} résidu sur la base de la matrice creuse optimale inclut la définition ${R}_{k} = Z - {π}_{r , k} {{P}_{k}}^{˜} {π}_{c , k}^{T}$, dans laquelle *Rₖ* représente le k^{ième} résidu, représente la matrice de signal, *P̃ₖ* représente la matrice creuse optimale pour le k^{ième} calcul récursif, π*_{r,k}* représente la k^{ième} matrice de sélection de ligne, et π*_{c,k}* représente la k^{ième} matrice de sélection de colonne.

7. Procédé selon l'une quelconque des revendications 1 à 6, dans lequel ladite sélection d'un atome le plus pertinent parmi la pluralité d'atomes de la matrice de signal inclut la sélection de l'atome le plus pertinent en utilisant l'équation suivante : $\left({i}_{k}, {j}_{k}\right) = arg {max}_{\left(i, j\right) ∈ \left\{\left(1, 1\right),\left(1, 2\right),…,\left(G, G\right)\right\}} \left|{{V}^{˜}}_{x}^{H}{R}_{k - 1}{{V}^{˜}}_{y}^{*}\right| ,$ dans laquelle ${{V}_{x}}^{˜}$ est un dictionnaire qui représente les projections d'une pluralité de points de grille depuis un système de coordonnées sphériques sur un axe des x d'un système de coordonnées cartésiennes, ${{V}^{˜}}_{x}^{H}$ représente la transposée conjuguée de *Ṽₓ*, *Ṽ_{y}* est un autre dictionnaire qui représente les projections de la pluralité de points de grille du système de coordonnées sphériques sur un axe des y du système de coordonnées cartésiennes, ${{V}^{˜}}_{y}^{∗}$ représente le conjugué de *Ṽ_{y}*, et *R*_{*k*-1} représente le (k-1)^{ième} résidu.

8. Système radar (100) comprenant :
une pluralité d'antennes configurées pour recevoir une pluralité de signaux de réflexion renvoyés par un objet cible (9) ; et
un processeur de signal (10) configuré pour estimer une pluralité de directions d'arrivée, DoA, correspondant respectivement à la pluralité de signaux de réflexion reçus par la pluralité d'antennes, en,
établissant une matrice de signal sur la base de la pluralité de signaux de réflexion en utilisant une technique de détection compressive, et en définissant une matrice de sélection de ligne initiale et une matrice de sélection de colonne initiale sur la base de la matrice de signal, où la matrice de signal inclut une pluralité d'atomes,
la définition de chacune de la matrice de sélection de ligne initiale et de la matrice de sélection de colonne initiale comme un étant ensemble vide, et la définition d'un résidu initial comme étant la matrice de signal, et en effectuant un calcul récursif pour un nombre K de fois, dans lequel un indice k est initialisé à zéro, et pour chacun des nombres K de fois du calcul récursif, avant que le calcul récursif ne soit effectué, l'indice k est incrémenté de un,
dans lequel, lorsque le calcul récursif est effectué pour la k^{ième} fois, le calcul récursif inclut
la sélection, d'un atome le plus pertinent, qui présente le produit scalaire avec un (k-1)^{ième} résidu le plus grand, parmi la pluralité d'atomes de la matrice de signal,
l'obtention d'une matrice de sélection de la k^{ième} ligne et une matrice de sélection de la k^{ième} colonne pour l'atome le plus pertinent en développant une matrice de sélection de la (k-1)^{ième} ligne et une matrice de sélection de la (k-1)^{ième} colonne,
l'obtention d'une matrice creuse optimale qui présente une norme la plus faible avec la matrice de signal, en calculant une valeur équivalente des moindres carrés en utilisant une technique d'inversion récursive, et
l'obtention d'un k^{ième} résidu sur la base de la matrice creuse optimale, et, en réponse au fait que l'indice k est inférieur au nombre K, la réalisation du calcul récursif pour une fois de plus, et
après avoir effectué le calcul récursif pour la k^{ième} fois, générer une k^{ième} matrice de sélection de ligne et une k^{ième} matrice de sélection de colonne afin d'obtenir la pluralité de DoA par compensation de phase,
dans lequel le nombre K est un nombre entier positif.
